# EUROPÄISCHE PATENTANMELDUNG

(11) **EP 2 086 198 A1**
(43) Veröffentlichungstag der Anmeldung: **05.08.2009**
(21) Anmeldenummer: 08002048.0
(22) Anmeldetag: 04.02.2008
(51) Int. Cl.: H04L 29/06, H04L 29/12

(54) **Verfahren zum Betrieb eines elektrischen Gerätes oder Netzwerks, Computerprogramm zur Implementierung des Verfahrens und zur Ausführung des Verfahrens vorgesehenes Gerät**

(71) Anmelder: SIEMENS AKTIENGESELLSCHAFT, 80333 München (DE)
(72) Erfinder: Becker, Peter, 76571 Gaggenau (DE); Holtz, Gunnar, 76131 Karlsruhe (DE)

(57) **Zusammenfassung**

Es wird ein Verfahren zum Betrieb eines elektrischen Gerätes, insbesondere Automatisierungsgerätes (20), oder eines zumindest zwei derartige Geräte umfassenden Netzwerks, insbesondere Automatisierungssystems (10), angegeben, bei dem beim Versenden eines Telegramms (30) nach dem TCP/IP-Protokoll der jeweilige Sender (32) einen Kopfabschnitt (44) des Telegramms (30) um seine MAC-Adresse (46) ergänzt und der jeweilige Empfänger (34) beim Empfang des Telegramms (30) die empfangene MAC-Adresse (46) im Hinblick auf eine Liste (56) zugelassener MAC-Adressen, also der damit kodierten zugelassenen Automatisierungsgeräte (20), überprüft und in Abhängigkeit vom Ergebnis der Überprüfung das Telegramm (30) z. B. verarbeitet, zwischenspeichert, verwirft, zurückweist, usw., wobei abhängig oder unabhängig vom Vergleichsergebnis eine Protokollierung der MAC-Adresse (46) des Senders (32) erfolgen kann.

## Beschreibung

Verfahren zum Betrieb eines elektrischen Gerätes oder Netzwerks, Computerprogramm zur Implementierung des Verfahrens und zur Ausführung des Verfahrens vorgesehenes Gerät

Die Erfindung betrifft ein Verfahren zum Betrieb eines elektrischen Gerätes, insbesondere Automatisierungsgerätes, oder eines Netzwerks, insbesondere Automatisierungssystems, mit einer Mehrzahl solcher Geräte. Konkret betrifft die Erfindung solche Geräte, insbesondere Automatisierungsgeräte, und daraus gebildete Netzwerke, insbesondere Automatisierungssysteme, die vorgesehen sind, mit anderen Geräten für einen Datenaustausch kommunikativ verbunden zu werden. Solche Geräte und Netzwerke sind an sich bekannt.

Der Begriff "Automatisierungsgerät" umfasst dabei sämtliche Geräte, Einrichtungen oder Systeme, also neben z. B. Steuerungen, wie speicherprogrammierbaren Steuerungen, Prozessrechnern, (Industrie-)Computern, dezentralen Peripheriegeräten, Bedien- und Beobachtungsgeräten und dergleichen, auch Antriebs- oder sonstige Aggregatsteuerungen, Frequenzumrichter und Ähnliches, wie sie zur Steuerung, Regelung und/oder Überwachung technologischer Prozesse z. B. zum Umformen oder Transportieren von Material, Energie oder Information etc. eingesetzt werden oder einsetzbar sind, wobei insbesondere über geeignete technische Einrichtungen, wie z. B. Sensoren oder Aktoren, Energie aufgewandt oder gewandelt wird. Als Automatisierungsgeräte werden dabei auch solche Teilnehmer in einem Automatisierungssystem aufgefasst, die nicht unmittelbar mit dem jeweiligen technischen Prozess interagieren, sondern z. B. zu Diagnosezwecken oder für Bedien- und Beobachtungsfunktionen, ggf. auch nur temporär, Bestandteil des Automatisierungssystems sind.

Bei bekannten Geräten der eingangs genannten Art, die dazu ausgebildet sind, in einem Netzwerk mit einer Anzahl kommunikativ verbundener weiterer Geräte verbunden zu werden, ist es üblich, dass zum Versenden eines Telegramms an ein anderes Gerät das Telegramm als Senderkennung und Empfängerkennung eine Kennung in Form einer Adresse, insbesondere einer IP-Adresse, umfasst, die das jeweilige Gerät als Sender und das andere Gerät als Empfänger ausweist.

Nachteilig bei einem derartigen Betriebsverfahren ist jedoch, dass der Empfänger nicht immer nachvollziehen kann, welches Gerät das jeweilige Telegramm übermittelt oder zu übermitteln versucht. Dies gilt insbesondere dann, wenn die Übermittlung oder der Übermittlungsversuch über so genannte Router erfolgt oder die IP-Adresse des Senders durch einen so genannten DHCP-Server vergeben wurde. Nur innerhalb eines lokalen Netzes sind die kommunizierenden Geräte (Sender und Empfänger) durch deren jeweilige so genannte MAC-Adresse immer eindeutig identifizierbar. Die Problematik, dass ein Empfänger den Sender eines Telegramms nicht in jeder Situation eindeutig identifizieren kann, wird mit zunehmender Komplexität der Netzwerke und der dabei installierten oder verwendeten Kommunikationsnetze von immer größerer Bedeutung, insbesondere um beabsichtigte oder unbeabsichtigte Zugriffe auf einzelne Geräte zu verhindern oder z. B. für eine Protokollierung festzustellen. Dies gilt insbesondere auch für geschlossene Kommunikationsnetze, wie z. B. das Netz einer Fabrik oder einer Automatisierungsanlage.

Nach dem Stand der Technik wird heute ein Sender über seine IP-Adresse identifiziert. Dies funktioniert zwar grundsätzlich auch über Router hinweg, aber die IP-Adresse ist z. B. wegen DHCP oder NAT-Routing nicht immer eindeutig. Darüber hinaus gibt es Router und so genannte Switches, die einzelne Teilnehmer, also Sender oder Empfänger, nur am lokalen Netz über deren jeweilige MAC-Adresse überprüfen, und zwar darauf, ob dieser Teilnehmer in diesem lokalen Netz zulässig ist. Die MAC-Adresse ist außerhalb des lokalen Netzes nach dem Stand der Technik unbekannt.

Komplexe Netzwerke umfassen eine Vielzahl kommunikativ verbundener Geräte, wobei einzelne Geräte jeweils einem lokalen Netz, also einem Teilsystem innerhalb des Netzwerks, zugehören. Ein Grund für eine derartige Konfiguration kann z. B. sein, dass ein Automatisierungssystem als exemplarische Ausführungsform eines solchen Netzwerks zur Steuerung und/oder Überwachung eines weiträumigen technischen Prozesses mit einer Mehrzahl von Teilprozessen vorgesehen ist, wobei als Geräte jedem Teilprozess eine Anzahl kommunikativ verbundener Automatisierungsgeräte zugeordnet sind, die je für sich einem lokalen Netz zugehören. Dann gibt es eine z. B. mit der Anzahl der von dem technischen Prozess umfassten Teilprozesse korrelierte Anzahl lokaler Netze und entsprechend Teilsysteme in dem Automatisierungssystem, die über Router oder Switches zu einem Gesamtnetz zusammengefasst sind, wobei Automatisierungsgeräte wie Router und dergleichen als Schnittstelle zwischen zumindest zwei lokalen Netzen fungieren. Ein Datenaustausch ist damit nicht nur zwischen Geräten eines lokalen Netzes, sondern auch zwischen einem Gerät eines ersten lokalen Netzes und einem Gerät eines anderen lokalen Netzes möglich. Ein in einer solchen Konstellation versendetes Telegramm gelangt dabei vom jeweils als Sender fungierenden Gerät über den oder jeden Router, der als Schnittstelle mittelbar oder unmittelbar zum anderen lokalen Netz fungiert, zum Gerät des anderen lokalen Netzes (Empfänger). Je nachdem, auf Basis welchen Verfahrens, z. B. DHCP oder NAT, dem Sender seine IP-Adresse zugewiesen wurde, kann sich ergeben, dass diese IP-Adresse nicht eindeutig ist und es insofern dem Empfänger nicht möglich ist, den Sender eindeutig zu identifizieren.

Das Dynamic Host Configuration Protocol (DHCP) ermöglicht bekanntlich mit Hilfe eines entsprechenden Servers eine dynamische Zuweisung einer IP-Adresse und weiterer Konfigurationsparameter an Teilnehmer in einem Netzwerk (z. B. Internet oder LAN). Network Address Translation (NAT) wiederum ist in Rechnernetzen der Sammelbegriff für Verfahren, um automatisiert und transparent Adressinformationen in Datenpaketen durch andere zu ersetzen. Diese kommen typischerweise auf Routern und Firewalls zum Einsatz.

Bei den hier im Vordergrund stehenden Netzwerken oder Automatisierungssystemen ist das Netzwerk normalerweise ein lokales Netzwerk (LAN) ggf. mit einer Schnittstelle zum Internet. Die Teilnehmer in einem solchen Netzwerk sind Geräte oder Automatisierungsgeräte verschiedenster Konfiguration wie oben angegeben, wobei auch "herkömmliche" so genannte Personal Computer in ein solches Netzwerk, z. B. in einer Funktion als Leitrechner und dergleichen, eingebunden sein können und insoweit ebenfalls z. B. als Automatisierungsgerät fungieren.

Eine Aufgabe der Erfindung besteht ausgehend von dem oben skizzierten Stand der Technik darin, eine Möglichkeit anzugeben, mit der für den Empfänger eines Telegramms der jeweilige Sender stets eindeutig identifizierbar ist.

Diese Aufgabe wird erfindungsgemäß mit den Merkmalen des Anspruchs 1 oder 2 gelöst. Soweit das Verfahren zum Betrieb eines Gerätes, insbesondere Automatisierungsgerätes, in einem Netzwerk, insbesondere Automatisierungssystem, mit einer Anzahl kommunikativ verbundener derartiger Geräte betroffen ist, wobei zum Versenden eines Telegramms nach dem TCP/IP-Protokoll an ein anderes Gerät das Telegramm als Senderkennung und Empfängerkennung eine Kennung in Form einer IP-Adresse umfasst, die das Gerät als Sender bzw. das andere Gerät als Empfänger ausweist, ist dazu vorgesehen, dass in einem Kopfabschnitt des Telegramms die MAC-Adresse des Senders übertragen wird und der Empfänger beim Empfang des Telegramms die übertragene MAC-Adresse des Senders auswertet, z.B. protokolliert oder in sonst geeigneter Weise für Dokumentationszwecke oder Ähnliches speichert.

Soweit ein Verfahren zum Betrieb eines Netzwerks, insbesondere Automatisierungssystems, mit einer Anzahl kommunikativ verbundener Geräte der o.g. Art betroffen ist, wobei einzelne Geräte, insbesondere Automatisierungsgeräte, jeweils einem lokalen Netz zugehören und wobei zum Versenden eines Telegramms nach dem TCP/IP-Protokoll von einem Gerät eines ersten lokalen Netzes (Sender) an ein Gerät eines anderen lokalen Netzes (Empfänger) das Telegramm eine Kennung des Empfängers als Empfängerkennung und eine Kennung des Senders als Senderkennung jeweils in Form einer IP-Adresse umfasst, ist entsprechend vorgesehen, dass in einem Kopfabschnitt des Telegramms die MAC-Adresse des Senders übertragen wird und der Empfänger beim Empfang des Telegramms die übertragene MAC-Adresse des Senders auswertet, z. B. protokolliert oder in sonst geeigneter Weise für Dokumentationszwecke oder Ähnliches speichert.

In einer bevorzugten Ausführungsform ist vorgesehen, dass in einem Kopfabschnitt des Telegramms die MAC-Adresse des Senders übertragen wird und der Empfänger beim Empfang des Telegramms anhand einer Liste zugelassener Automatisierungsgeräte, die deren jeweilige MAC-Adresse umfasst, prüft, ob das Telegramm verarbeitet werden kann.

Der Vorteil der Erfindung besteht darin, dass eine MAC-Adresse normalerweise weltweit eindeutig ist und kaum Möglichkeiten bestehen, eine MAC-Adresse zu verändern. Wenn also versendete Telegramme die MAC-Adresse des jeweiligen Senders umfassen, ist dieser für jeden Empfänger eindeutig identifizierbar, und zwar auch dann, wenn diesem zum Versenden des Telegramms nach dem TCP/IP-Protokoll temporär oder dauerhaft durch bekannte Adresszuweisungsverfahren, wie oben erwähnt, eine nicht eindeutige IP-Adresse zugewiesen wird.

Der Ansatz gemäß der Erfindung eignet sich neben den als bevorzugt herausgestellten Automatisierungsgeräten grundsätzlich für alle Typen von Teilnehmern eines IP-Netzes mit einer eindeutigen 6-Byte-MAC-Adresse, so dass wann immer hier und im Folgenden der Begriff "Automatisierungsgerät" verwendet wird an dessen Stelle auch der Begriff "Gerät" und für "Automatisierungssystem" auch "Netzwerk" stehen kann.

Vorteilhafte Ausgestaltungen der Erfindung sind Gegenstand der Unteransprüche. Dabei verwendete Rückbeziehungen weisen auf die weitere Ausbildung des Gegenstandes des Hauptanspruches durch die Merkmale des jeweiligen Unteranspruches hin; sie sind nicht als ein Verzicht auf die Erzielung eines selbständigen, gegenständlichen Schutzes für die Merkmalskombinationen der rückbezogenen Unteransprüche zu verstehen. Des Weiteren ist im Hinblick auf eine Auslegung der Ansprüche bei einer näheren Konkretisierung eines Merkmals in einem nachgeordneten Anspruch davon auszugehen, dass eine derartige Beschränkung in den jeweils vorangehenden Ansprüchen nicht vorhanden ist.

Bevorzugt ist vorgesehen, dass zur Übertragung der MAC-Adresse des Senders im Kopfabschnitt des jeweiligen Telegramms die MAC-Adresse in einem für Optionen, insbesondere einem für zu registrierende Optionen vorgesehenen Bereich des Kopfabschnitts übertragen wird. Zur Realisierung der Erfindung kann also die von TCP bereits vorgesehene Möglichkeit, weitere Parameter beim Verbindungsaufbau zu übertragen, ausgenutzt werden. Damit lässt sich der Ansatz auf alle auf TCP basierenden Protokolle anwenden. Zudem lässt sich der Aufwand für die Kontrolle auf den Verbindungsaufbau beschränken.

Gemäß einer alternativen Ausführungsform kann vorgesehen sein, dass zur Übertragung der MAC-Adresse des Senders im Kopfabschnitt des jeweiligen Telegramms die MAC-Adresse als zu registrierende IP-Option übertragen wird. Damit wird der erfindungsgemäße Ansatz für alle auf IP basierende Protokolle, z. B. auch UDP, verwendbar. Eine Kontrolle kann beim Empfang jedes einzelnen IP-Telegramms stattfinden. Dazu sei erläuternd angemerkt, dass eine TCP-Verbindung, also der Transfer eines Telegramms von einem Sender zu einem Empfänger wie oben beschrieben, eine so genannte Ende-zu-Ende-Verbindung ist. Eventuelle Zwischenstationen, wie andere Geräte oder Automatisierungsgeräte, insbesondere in Form von Geräten mit Schnittstellenfunktionen zum Übergang in andere lokale Netze, z. B. Router, werden dabei nicht betrachtet. Der Empfänger ist also dasjenige Gerät, das beim Empfang des Telegramms die mit übertragene MAC-Adresse auswertet und z. B. prüft, ob das Telegramm verarbeitet werden kann.

Demgegenüber sind IP-Verbindungen so genannte Punkt-zu-Punkt-Verbindungen und umfassen also in einer Ende-zu-Ende-Verbindung jede Station entlang eines Kommunikationspfades, welchen das Telegramm vom jeweiligen Sender zum jeweiligen Empfänger nimmt. Auf dieser Ebene können auch Geräte oder Automatisierungsgeräte, die das jeweilige Telegramm im Rahmen von Punkt-zu-Punkt-Verbindungen zeitlich vor dem Empfänger erhalten und dieses ggf. zur mittelbaren Weiterleitung an den Empfänger an ein anderes Gerät oder Automatisierungsgerät oder zur unmittelbaren Weiterleitung an den Empfänger an diesen weiterleiten, die MAC-Adresse des Senders, wie vorstehend oder weiter unten mit zusätzlichen Details beschrieben, auswerten oder überprüfen, und zwar sowohl jedes auf IP-Ebene versandte Datagramm als auch in hierarchisch übergeordneten Ebenen, z. B. TCP, versandte Telegramme. In einer solchen Konstellation wird jedes in einen Kommunikationsvorgang involvierte Gerät oder Automatisierungsgerät zu einem Empfänger, nämlich zum Empfänger in der jeweiligen Punkt-zu-Punkt-Verbindung. Abgesehen von dieser dem Gesamtzusammenhang der Anmeldung zugrunde zu legenden erweiternden Definition des Begriffes "Empfänger" wird in der nachfolgenden Beschreibung die Bezeichnung "Empfänger" für das in einer Ende-zu-Ende-Verbindung als Empfänger angegebene Gerät verwendet. Nachdem bei UDP auch so genannte Multi- oder Broadcast-Adressen als Empfängeradressen angegeben werden können, steht die Möglichkeit der Auswertung und Protokollierung wie hier oder nachfolgend beschrieben auch für Multi- oder Broadcast-Sendungen zur Verfügung.

Die Prüfung, ob das Telegramm verarbeitet werden kann, entweder durch den Empfänger in einer Ende-zu-Ende-Verbindung oder jeden Empfänger in einer Punkt-zu-Punkt-Verbindung im Rahmen einer solchen Ende-zu-Ende-Verbindung, kann eine Protokollierung der jeweiligen MAC-Adresse, z. B. für spätere Analysen ein Verwerfen oder Zurückweisen des jeweiligen Telegramms, z. B. um unberechtigte Zugriffe zu verhindern, das Absetzen einer Alarmmeldung, usw. umfassen. Zur Prüfung verfügt der Empfänger über eine Liste zugelassener Geräte, insbesondere Automatisierungsgeräte, die deren jeweilige MAC-Adresse umfasst, mit denen die MAC-Adresse des jeweils empfangenen Telegramms durch übliche Vergleichsoperationen verglichen wird. Die Maßnahmen, die durch das jeweilige Gerät bei einem erfolgreichen oder nicht erfolgreichen Vergleich automatisch veranlasst werden, können bedarfsweise implementiert oder aktiviert werden, wobei bei einem erfolgreichen Vergleich zumindest eine Verarbeitung des empfangenen Telegramms ermöglicht wird. Eine Protokollierung der MAC-Adressen empfangener Telegramme kann sowohl für den erfolgreichen wie für den nicht erfolgreichen Vergleich vorgesehen sein. Für den nicht erfolgreichen vergleich kann ein Ignorieren, ein Zwischenspeichern oder ein Abweisen des Telegramms vorgesehen sein. Darüber hinaus kann auch, z. B. im Wege einer Alarmmeldung, eine übergeordnete Station, z. B. ein als Leitrechner fungierendes Gerät, über den auf diese Weise evtl. erkannten unberechtigten Zugriff informiert werden.

Das Verfahren zum Betrieb der hier beschriebenen Geräte oder das Verfahren zum Betrieb eines eine Anzahl solcher Geräte umfassenden Netzwerks ist üblicherweise in Software oder kombiniert in Soft- und Hardware oder Firmware, z. B. einem ASIC oder dergleichen, implementiert. Dazu umfasst das Gerät Programmcodeanweisungen, die eine Soft-, Hard- und/oder Firmwarefunktionalität, die dem Gerät eine kommunikative Verbindung mit anderen Geräten ermöglicht, ergänzen, derart, dass einerseits in einem Kopfabschnitt des Telegramms die MAC-Adresse des jeweiligen Gerätes übertragen wird und andererseits beim Empfang eines Telegramms anhand der davon umfassten MAC-Adresse und einer Liste zugelassener Geräte, die deren jeweilige MAC-Adresse umfasst, geprüft wird, ob das Telegramm verarbeitet werden kann. Insoweit betrifft die Erfindung auch ein entsprechendes Computerprogramm oder ein Computerprogrammprodukt, z. B. einen magnetischen, elektrischen, optischen, usw. Datenträger, mit einem solchen Computerprogramm. Schließlich betrifft die Erfindung auch solche Geräte, insbesondere Automatisierungsgeräte, mit Mitteln, also insbesondere den vorgenannten Programmcodemitteln, zur Ausführung des Verfahrens wie oben oder nachfolgend weiter beschrieben, insbesondere ein Automatisierungsgerät mit einem solchen Computerprogramm.

Nachfolgend wird ein Ausführungsbeispiel der Erfindung anhand der Zeichnung näher erläutert. Einander entsprechende Gegenstände oder Elemente sind in allen Figuren mit den gleichen Bezugszeichen versehen. Das oder jedes Ausführungsbeispiel ist nicht als Einschränkung der Erfindung zu verstehen. Vielmehr sind im Rahmen der vorliegenden Offenbarung zahlreiche Abänderungen und Modifikationen möglich, insbesondere solche Varianten und Kombinationen, die z. B. durch Kombination oder Abwandlung von einzelnen in Verbindung mit den im allgemeinen oder speziellen Beschreibungsteil beschriebenen sowie in den Ansprüchen und/oder der Zeichnung enthaltenen Merkmalen bzw. Elementen oder Verfahrensschritten für den Fachmann im Hinblick auf die Lösung der Aufgabe entnehmbar sind und durch kombinierbare Merkmale zu einem neuen Gegenstand oder zu neuen Verfahrensschritten bzw. Verfahrensschrittfolgen führen.

Es zeigen:
- FIG 1: eine schematisch vereinfachte Darstellung eines eine Mehrzahl von Automatisierungsgeräten umfassenden Automatisierungssystems zur Steuerung und/oder Über- wachung eines technischen Prozesses,
- FIG 2: eine schematisch vereinfachte Darstellung zur Illust- ration einer Übermittlung eines Telegramms zwischen einem für den dargestellten Übermittlungsvorgang als Sender fungierenden Automatisierungsgerät und einem ebenfalls nur für den dargestellten Übermittlungs- vorgang als Empfänger fungierenden Automatisierungs- gerät, wobei beide an dem Übermittlungsvorgang be- teiligten Automatisierungsgeräte zur Ausführung der Erfindung ertüchtigt sind, und
- FIG 3: eine schematisch vereinfachte Darstellung des Auto- matisierungssystems gemäß FIG 1, wobei ein Übermitt- lungsvorgang wie in FIG 2 gezeigt zwischen Automati- sierungsgeräten erfolgt, die in dem Automatisierungs- system zu unterschiedlichen lokalen Netzen gehören.

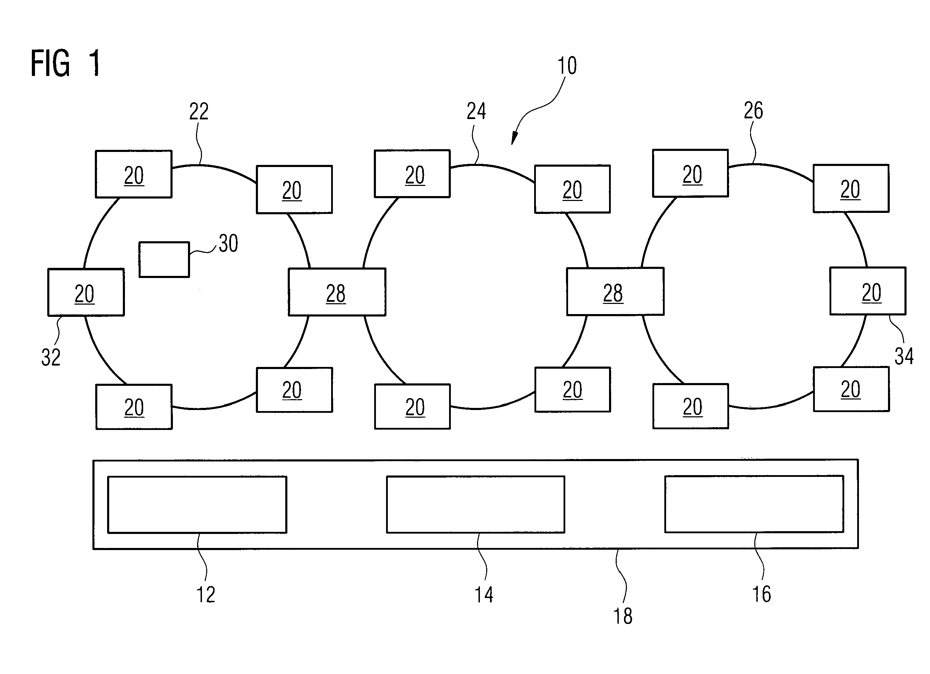

FIG 1 zeigt als Beispiel für ein Netzwerk kommunikativ verbundener elektrischer Geräte ein insgesamt mit 10 bezeichnetes Automatisierungssystem, das z. B. zur Steuerung und/oder Überwachung eines Teilprozesse 12, 14, 16 umfassenden und ebenso wie die Teilprozesse 12-16 nur schematisch vereinfacht dargestellten technischen Prozesses 18 vorgesehen ist. Das Automatisierungssystem 10 umfasst als darin zusammengefasste Geräte eine Mehrzahl von Automatisierungsgeräten 20, wobei die Automatisierungsgeräte in an sich bekannter Art und Weise mit dem technischen Prozess 18, z. B. über nicht dargestellte Sensoren und Aktoren, Daten austauschen, derart, dass über Sensoren Zustandsinformationen aus dem technischen Prozess 18 aufgenommen werden und Aktoren, z. B. Motore, Ventile, usw., zur Beeinflussung des technischen Prozesses 18 angesteuert werden.

In dem Automatisierungssystem 10 sind die Automatisierungsgeräte 20 untereinander kommunikativ verbunden, wobei das Automatisierungssystem 10 z. B. eine Mehrzahl lokaler Netze 22, 24, 26 umfasst und jedes lokale Netz 22-26 z. B. einem Teilprozess 12-16 zugeordnet sein kann. Zur Verbindung der lokalen Netze 22-26 untereinander sind spezielle Automatisierungsgeräte, z. B. in Form eines Routers 28, vorgesehen. Jeder Router 28 fungiert damit als Schnittstelle zwischen den jeweils mindestens zwei angeschlossenen lokalen Netzen 22, 24; 24, 26. Beim Versenden eines Telegramms 30 von einem im Folgenden zur Unterscheidung als Sender 32 bezeichneten Automatisierungsgerät 20 an ein anderes Automatisierungsgerät 20, das ebenfalls aus Gründen der Unterscheidbarkeit im Folgenden als Empfänger 34 (Empfänger in einer Ende-zu-Ende-Verbindung) bezeichnet wird, gelangt das Telegramm 30, wenn der Empfänger 34 nicht zum selben lokalen Netz 22-26 wie der Sender 32 gehört, vom Sender 32 über ein oder mehrere Router 28 in ein jeweils benachbartes lokales Netz 24, 26 und schließlich zum Empfänger 34.

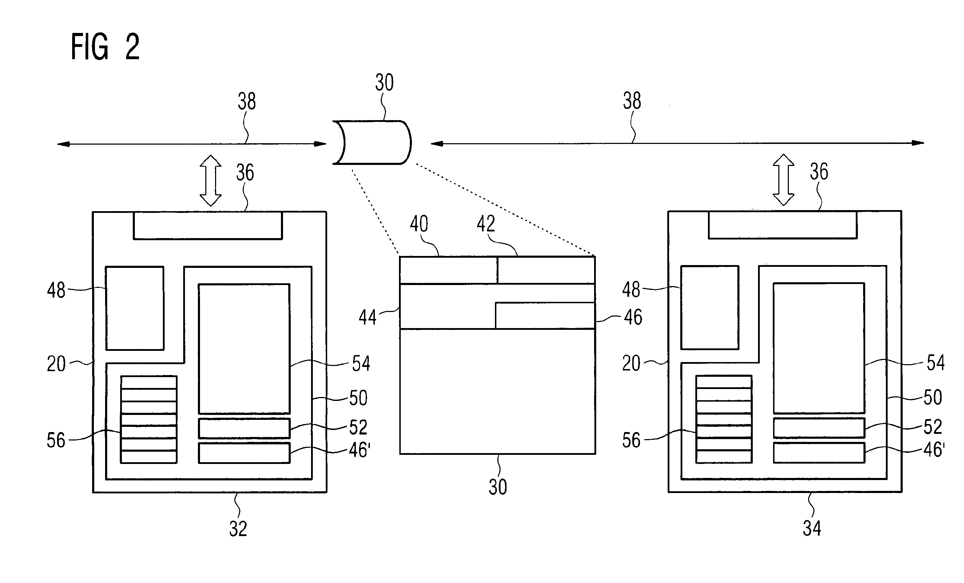

FIG 2 zeigt Details der Darstellung in FIG 1 in vergrößerter Ansicht. Die Darstellung ist auf zwei für die Übermittlung eines Telegramms 30 als Sender 32 und Empfänger 34 fungierende Automatisierungsgeräte 20 reduziert. Jedes Automatisierungsgerät 20 umfasst eine Busschnittstelle 36, die eine kommunikative Verbindung mit anderen Automatisierungsgeräten 20, also ein Anschluss an eine Kommunikationsleitung, z. B. einen Bus, insbesondere einen Feldbus 38, ermöglicht. Jedes lokale Netz 22-26 (FIG 1) wird durch mindestens eine solche Kommunikationsleitung in grundsätzlich beliebiger Topologie (Stern, Ring, usw.) gebildet.

Jedes Telegramm 30 umfasst eine Senderkennung 40 und eine Empfängerkennung 42, die den jeweiligen Sender 32 bzw. Empfänger 34 in Form einer IP-Adresse ausweist. Beim Austausch von Telegrammen 30 zwischen Automatisierungsgeräten 20 unterschiedlicher lokaler Netze 22-26 (FIG 1) kann es vorkommen, dass dem jeweiligen Sender 32 keine eindeutige IP-Adresse zugeordnet ist. Ein Grund dafür kann sein, dass die IP-Adresse des Senders 32 durch einen DHCP-Server vergeben wurde oder dass die IP-Adresse aufgrund einer Verwendung von NAT-Routing nicht eindeutig ist. Erfindungsgemäß ist daher vorgesehen, dass jedes von einem nach der Erfindung ertüchtigten Automatisierungsgerät 20 übermittelte Telegramm 30 in einem Kopfabschnitt 44 desselben neben der Sender- und Empfängerkennung 40, 42 eine zusätzliche Kennung 46 umfasst, die der MAC-Adresse des Senders 32 entspricht. Nachdem die zusätzliche Kennung 46 damit eine Kopie der MAC-Adresse des jeweiligen Senders 32 ist, wird die zusätzliche Kennung im Folgenden nur noch als MAC-Adresse 46 bezeichnet und unter dem gleichen Bezugszeichen referenziert.

Damit ein Automatisierungsgerät 20 ein in dieser Weise modifiziertes Telegramm 30 versenden kann, ist vorgesehen, dass jedes Automatisierungsgerät 20, das in an sich bekannter Art und Weise eine Verarbeitungseinheit nach Art eines Prozessors 48 und einen Speicher 50 umfasst, in dem Speicher 50 implementierte Programmcodemittel 52 umfasst, mit denen zumindest eine Funktion implementiert ist, die jedes Telegramm 30 in seinem Kopfabschnitt 44 um die MAC-Adresse 46 des jeweiligen Automatisierungsgerätes 20 ergänzt. Dazu ist die MAC-Adresse 46 in an sich bekannter Art auch im Speicher 50 jedes Automatisierungsgerätes 20 hinterlegt. Die Programmcodeanweisungen 52 ergänzen eine ebenfalls in dem Speicher 50 abgelegte Kommunikationsfunktionalität 54, mit der eine Bedienung der Busschnittstelle 36 und damit eine Möglichkeit zur kommunikativen Verbindung mit anderen Automatisierungsgeräten 20 implementiert ist, namentlich eine Möglichkeit zum Übermitteln von Telegrammen 30 nach dem TCP/IP-Protokoll. Jedes Automatisierungsgerät 20, also unabhängig davon, ob dieses in einem konkreten Kommunikationsszenario, also bei der Übermittlung eines Telegramms 30, als Sender 32 oder Empfänger 34 fungiert, weist, soweit die Erfindung betroffen ist, gleiche Kommunikationsfunktionalitäten 54 auf. Dass darüber hinaus jedes Automatisierungsgerät 20 variierende Funktionalitäten zur Interaktion mit dem technischen Prozess 18 (FIG 1) und/oder einem Benutzer haben kann, ist im Zusammenhang mit der Erläuterung der vorliegenden Erfindung nicht weiter von Bedeutung und entsprechend in der graphischen Darstellung auch nicht weiter thematisiert. An dieser Stelle soll es genügen, dass der Speicher 50 oder ein weiterer, nicht dargestellter Speicher bei Automatisierungsgeräten 20 üblicherweise ein Anwenderprogramm als Automatisierungslösung umfasst, die bei Ausführung durch den Prozessor 48 oder einen anderen, nicht dargestellten Prozessor bestimmt, wie die Interaktion mit dem technischen Prozess 18 im Detail abläuft.

In einem Kommunikationsvorgang kann jedes als Empfänger 34 fungierende Automatisierungsgerät 20 (Empfänger in einer Punkt-zu-Punkt-Verbindung oder Empfänger in einer Ende-zu-Ende-Verbindung) ein empfangenes Telegramm 30, das die MAC-Adresse 46 des Senders 32 umfasst, prüfen. Dazu ist eine Liste 56 vorgesehen, die eine Anzahl zur Kommunikation mit dem jeweiligen Empfänger 34 zugelassener Automatisierungsgeräte 20 durch deren jeweilige MAC-Adresse kodiert. Beim Empfang eines Telegramms 30 überprüft also der jeweilige Empfänger anhand der MAC-Adresse 46 des empfangenen Telegramms 30 und der Liste 56 zugelassener MAC-Adressen, ob das Telegramm 30 verarbeitet werden kann. Zur Überprüfung reicht ein herkömmlicher Vergleich der beiden zu untersuchenden MAC-Adressen auf Identität aus. Bei einer Vielzahl von in der Liste 56 gespeicherter zugelassener MAC-Adressen können auch übliche Verfahren zur Beschleunigung solcher Vergleiche, wie z. B. eine Organisation der zugelassenen MAC-Adressen in Form eines Binärbaums oder dergleichen oder Hash-unterstützte Suchen, zum Einsatz kommen.

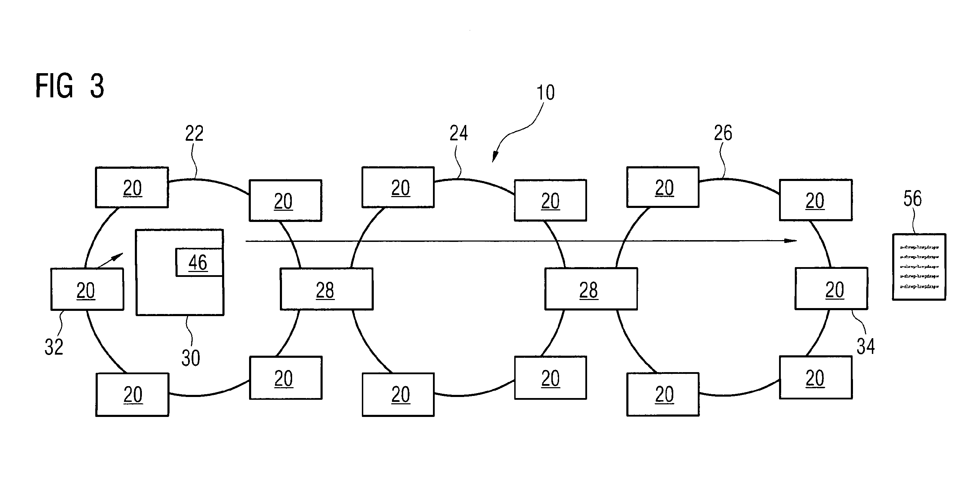

Das Ergebnis des Ansatzes gemäß der Erfindung und der damit verbundene Vorteil ist schematisch vereinfacht noch einmal in FIG 3 dargestellt, wobei in FIG 3 im Wesentlichen die Darstellung des Automatisierungssystems 10 aus FIG 1 wiederholt ist und insofern auf die dortige Beschreibung verwiesen wird. Nach dem Ansatz gemäß der Erfindung wird jedes von einem in einem Kommunikationsvorgang als Sender 32 fungierenden Automatisierungsgerät 20 abgesetzte Telegramm 30 um die MAC-Adresse 46 des Senders 32 ergänzt. Unabhängig davon, wie der Sender 32 seine IP-Adresse erhalten hat, bleibt die MAC-Adresse 46, die den jeweiligen Sender 32 normalerweise weltweit eindeutig identifiziert, während des kompletten Kommunikationsvorgangs erhalten, also sowohl während der Ende-zu-Ende-Verbindung zwischen Sender 32 und Empfänger 34 als auch bei jeder während dieses Kommunikationsvorgangs hergestellten Punkt-zu-Punkt-Verbindung, also z. B. einer Verbindung zwischen einem Automatisierungsgerät 20 und einem als Schnittstelle fungierenden Router 28, um das Telegramm 30 in ein benachbartes lokales Netz 22-26 zu übertragen. Wenn das Telegramm 30 schließlich beim Empfänger 34 eintrifft, kann dieser den ursprünglichen Sender 32 immer noch eindeutig anhand der vom Telegramm 30 umfassten MAC-Adresse 46 identifizieren. Anhand einer von jedem nach dem Verfahren arbeitenden Automatisierungsgerät 20, also auch von dem Empfänger 34, vorgehaltenen Liste 56 mit zugelassenen MAC-Adressen kann überprüft werden, wie mit dem empfangenen Telegramm 30 zu verfahren ist.

Zusammenfassend lässt sich die Erfindung damit kurz wie folgt beschreiben: Es wird ein Verfahren zum Betrieb eines elektrischen Gerätes, insbesondere Automatisierungsgerätes 20, oder eines zumindest zwei derartige Geräte umfassenden Netzwerks, insbesondere Automatisierungssystems 10, angegeben, bei dem beim Versenden eines Telegramms 30 nach dem TCP/IP-Protokoll der jeweilige Sender 32 einen Kopfabschnitt 44 des Telegramms 30 um seine MAC-Adresse 46 ergänzt und der jeweilige Empfänger 34 beim Empfang des Telegramms 30 die empfangene MAC-Adresse 46 z. B. im Hinblick auf eine Liste 56 zugelassener MAC-Adressen, also der damit kodierten zugelassenen Automatisierungsgeräte 20, überprüft und in Abhängigkeit vom Ergebnis der Überprüfung das Telegramm 30 z. B. verarbeitet, zwischenspeichert, verwirft, zurückweist, usw., wobei abhängig oder unabhängig vom Vergleichsergebnis insbesondere eine Protokollierung der MAC-Adresse 46 des Senders 32 erfolgen kann.

## Patentansprüche

1. Verfahren zum Betrieb eines elektrischen Gerätes, insbesondere eines Automatisierungsgerätes (20), in einem Netzwerk, insbesondere einem Automatisierungssystem (10), mit einer Anzahl kommunikativ verbundener Geräte,
wobei zum Versenden eines Telegramms (30) nach dem TCP/IP-Protokoll an ein anderes Gerät das Telegramm (30) als Senderkennung (40) und Empfängerkennung (42) eine Kennung in Form einer IP-Adresse umfasst, die das Gerät als Sender (32) bzw. das andere Gerät als Empfänger (34) ausweist,
**dadurch gekennzeichnet, dass**
in einem Kopfabschnitt (44) des Telegramms (30) die MAC-Adresse des Senders (32) übertragen wird und
der Empfänger (34) beim Empfang des Telegramms (30) die übertragene MAC-Adresse des Senders (32) auswertet.

2. Verfahren zum Betrieb eines Netzwerks, insbesondere Automatisierungssystems (10), mit einer Anzahl kommunikativ verbundener Geräte, insbesondere Automatisierungsgeräte (20), wobei einzelne Geräte jeweils einem lokalen Netz (22, 24, 26) zugehören und
wobei zum Versenden eines Telegramms (30) nach dem TCP/IP-Protokoll von einem Gerät eines ersten lokalen Netzes (22) - Sender (32) - an ein Gerät eines anderen lokalen Netzes (24) - Empfänger (34) - das Telegramm (30) eine Kennung des Empfängers (34) als Empfängerkennung (42) und eine Kennung des Senders (32) als Senderkennung (40) jeweils in Form einer IP-Adresse umfasst,
**dadurch gekennzeichnet, dass**
in einem Kopfabschnitt (44) des Telegramms (30) die MAC-Adresse (46) des Senders (32) übertragen wird und
der Empfänger (34) beim Empfang des Telegramms (30) die übertragene MAC-Adresse des Senders (32) auswertet.

3. Verfahren nach Anspruch 1 oder 2, wobei die Auswertung der übertragenen MAC-Adresse des Senders (32) umfasst, dass der Empfänger (34) beim Empfang des Telegramms (30) anhand einer Liste (56) zugelassener Geräte, die deren jeweilige MAC-Adresse umfasst, prüft, ob das Telegramm (30) verarbeitet werden kann.

4. Verfahren nach Anspruch 1, 2 oder 3, wobei zur Übertragung der MAC-Adresse (46) des Senders (32) im Kopfabschnitt (44) des jeweiligen Telegramms (30) vorgesehen ist, dass die MAC-Adresse (46) in einem für Optionen vorgesehenen Bereich des Kopfabschnitts (44) übertragen wird.

5. Verfahren nach Anspruch 1, 2 oder 3, wobei zur Übertragung der MAC-Adresse (46) des Senders (32) im Kopfabschnitt (44) des jeweiligen Telegramms (30) vorgesehen ist, dass die MAC-Adresse (46) als zu registrierende IP-Option übertragen wird.

6. Verfahren nach einem der vorangehenden Ansprüche, wobei der Empfänger das Telegramm (30) abweist, wenn dieses den Sender (32) nicht durch seine MAC-Adresse (46) ausweist.

7. Verfahren nach Anspruch 3, 4, 5 oder 6, wobei der Empfänger das Telegramm (30) abweist, wenn die übertragene MAC-Adresse des Senders (32) mit keiner der von der Liste (56) zugelassener Geräte umfassten MAC-Adressen übereinstimmt.

8. Computerprogramm zur Ausführung eines Verfahrens gemäß einem der Ansprüche 1 bis 7.

9. Datenträger mit einem Computerprogramm nach Anspruch 8.

10. Elektrisches Gerät, insbesondere Automatisierungsgerät (20), mit Mitteln zur Ausführung des Verfahrens nach einem der Ansprüche 1 bis 7, insbesondere Automatisierungsgerät (20), auf dem ein Computerprogramm nach Anspruch 6 geladen ist.

## Geänderte Patentansprüche

### Geänderte Patentansprüche gemäss Regel 137(2) EPÜ.

**1.** Verfahren zum Betrieb eines Netzwerks, insbesondere Automatisierungssystems (10), mit einer Anzahl kommunikativ verbundener Geräte, insbesondere Automatisierungsgeräte (20),
wobei einzelne Geräte jeweils einem lokalen Netz (22, 24, 26) zugehören und
wobei zum Versenden eines Telegramms (30) nach dem TCP/IP-Protokoll von einem Gerät eines ersten lokalen Netzes (22)
- Sender (32) - an ein Gerät eines anderen lokalen Netzes (24) - Empfänger (34) - das Telegramm (30) eine Kennung des Empfängers (34) als Empfängerkennung (42) und eine Kennung des Senders (32) als Senderkennung (40) jeweils in Form einer IP-Adresse umfasst,
**dadurch gekennzeichnet, dass**
in einem Kopfabschnitt (44) des Telegramms (30) die MAC-Adresse (46) des Senders (32) übertragen wird und
der Empfänger (34) beim Empfang des Telegramms (30) die übertragene MAC-Adresse des Senders (32) auswertet.

**2.** Verfahren nach Anspruch 1, wobei die Auswertung der übertragenen MAC-Adresse des Senders (32) umfasst, dass der Empfänger (34) beim Empfang des Telegramms (30) anhand einer Liste (56) zugelassener Geräte, die deren jeweilige MAC-Adresse umfasst, prüft, ob das Telegramm (30) verarbeitet werden kann.

**3.** Verfahren nach Anspruch 1 oder 2, wobei zur Übertragung der MAC-Adresse (46) des Senders (32) im Kopfabschnitt (44) des jeweiligen Telegramms (30) vorgesehen ist, dass die MAC-Adresse (46) in einem für Optionen vorgesehenen Bereich des Kopfabschnitts (44) übertragen wird.

**4.** Verfahren nach Anspruch 1 oder 2, wobei zur Übertragung der MAC-Adresse (46) des Senders (32) im Kopfabschnitt (44) des jeweiligen Telegramms (30) vorgesehen ist, dass die MAC-Adresse (46) als zu registrierende IP-Option übertragen wird.

**5.** Verfahren nach einem der vorangehenden Ansprüche, wobei der Empfänger das Telegramm (30) abweist, wenn dieses den Sender (32) nicht durch seine MAC-Adresse (46) ausweist.

**6.** Verfahren nach Anspruch 2, 3, 4 oder 5, wobei der Empfänger das Telegramm (30) abweist, wenn die übertragene MAC-Adresse des Senders (32) mit keiner der von der Liste (56) zugelassener Geräte umfassten MAC-Adressen übereinstimmt.

**7.** Computerprogramm zur Ausführung eines Verfahrens gemäß einem der Ansprüche 1 bis 6.

**8.** Datenträger mit einem Computerprogramm nach Anspruch 7.

**9.** Elektrisches Gerät, insbesondere Automatisierungsgerät (20), mit Mitteln zur Ausführung des Verfahrens nach einem der Ansprüche 1 bis 6, insbesondere Automatisierungsgerät (20), auf dem ein Computerprogramm nach Anspruch 7 geladen ist.

**10.** Verfahren zum Betrieb eines elektrischen Gerätes gemäß Anspruch 9, insbesondere eines Automatisierungsgerätes (20), in einem Netzwerk, insbesondere einem Automatisierungssystem (10), mit einer Anzahl kommunikativ verbundener Geräte,
wobei zum Versenden eines Telegramms (30) nach dem TCP/IP-Protokoll an ein anderes Gerät das Telegramm (30) als Senderkennung (40) und Empfängerkennung (42) eine Kennung in Form einer IP-Adresse umfasst, die das Gerät als Sender (32) bzw. das andere Gerät als Empfänger (34) ausweist,
**dadurch gekennzeichnet, dass**
in einem Kopfabschnitt (44) des Telegramms (30) die MAC-Adresse des Senders (32) übertragen wird.
